# EUROPÄISCHE PATENTSCHRIFT

(11) **EP 1 571 031 B1**
(45) Veröffentlichungstag und Bekanntmachung des Hinweises auf die Patenterteilung: **23.04.2008**
(21) Anmeldenummer: 05002391.0
(22) Anmeldetag: 04.02.2005
(51) Int. Cl.: B60K 17/22, B60K 17/02

(54) **Antriebsanordnung**
Drive arrangement
Dispositif d'entraînement

(30) Priorität: 06.03.2004 DE 102004011058
(43) Veröffentlichungstag der Anmeldung: 07.09.2005
(73) Patentinhaber: AUDI AG, 85045 Ingolstadt (DE)
(72) Erfinder: Märkl, Johann, 85128 Nassenfels (DE)
(74) Vertreter: Asch, Konrad

(56) Entgegenhaltungen:
- EP-A- 0 548 871
- EP-A- 1 220 761
- DE-A1- 19 810 353

## Beschreibung

Die Erfindung betrifft eine Antriebsanordnung zwischen einer Brennkraftmaschine und einem Geschwindigkeits-Wechselgetriebe für Kraftfahrzeuge gemäß dem Oberbegriff des Patentanspruches 1.

Eine Antriebsanordnung der gattungsgemäßen Art zeigt beispielsweise die EP 1 220 761 B1. Um den nötigen Freigang für eine im Bereich des Anfahrelementes quer verlaufende Antriebswelle eines seitlich angeordneten Differenziales herzustellen, ist das Anfahrelement - im Ausführungsbeispiel eine hydraulisch betätigte Lamellenkupplung - entsprechend von der Brennkraftmaschine weg verlegt und getriebe- oder motorseitig über eine Zwischenwand abgestützt. Daraus resultiert aber eine baulich und konstruktiv aufwändigere Antriebsanordnung.

Aufgabe der Erfindung ist es, eine Antriebsanordnung der gattungsgemäßen Art vorzuschlagen, die baulich einfacher und montagegünstiger ausgebildet ist.

Diese Aufgabe wird erfindungsgemäß mit den kennzeichnenden Merkmalen des Patentanspruches 1 gelöst. Vorteilhafte Weiterbildungen der Erfindung beschreiben die weiteren Patentansprüche.

Erfindungsgemäß wird vorgeschlagen, dass der Mitnehmerflansch durch ein Taumelbewegungen zulassendes Mitnehmerblech gebildet ist und dass das Anfahrelement über ein weiteres Lager auf der Eingangswelle drehbar gelagert bzw. abgestützt ist. Damit kann eine separate Zwischenwand im Bereich des Anfahrelementes (z.B. ein Drehmomentwandler, eine Ein- oder Mehrscheibenkupplung, etc.) entfallen, woraus eine kurz bauende und montage- und fertigungstechnisch günstige Konstruktion resultiert. Das Anfahrelement stützt sich dabei zusätzlich über das weitere Lager auf der Eingangswelle des Wechselgetriebes ab, wodurch mit geringem zusätzlichem Aufwand eine schwingungsresistente und drehzahlfeste Lagerung des Anfahrelementes erzielt ist.

In vorteilhafter Weiterbildung der Erfindung ist an dem Anfahrelement eine axial zur Kurbelwelle abragende und die Eingangswelle umschließende Führungshülse vorgesehen, die ebenfalls in der Lageraufnahme der Kurbelwelle gelagert ist. Dies führt zu einer Aufteilung der Abstützkräfte bzw. -momente, die teilweise über die Führungshülse direkt an der Kurbelwelle und teilweise über die Eingangswelle an der Kurbelwelle und an dem getriebeseitigen Lager zur Wirkung kommen.

Dabei können die Führungshülse und die Eingangswelle radial übereinander liegend in der Lageraufnahme der Kurbelwelle drehbar gelagert sein, wobei zumindest das äußere Lager der Führungshülse ein begrenzte Kippbewegungen der Eingangswelle relativ zur Kurbelwelle zulassendes Lager ist. Somit können bei baulich vereinfachter Konstruktion geringe Planlauffehler und daraus resultierende Verspannungen in der Antriebsanordnung ausgeglichen werden.

Zwischen der Eingangswelle und der Führungshülse kann bevorzugt im Bereich der entsprechenden Lagerzapfen eine Lagerhülse aus entsprechendem Lagermetall angeordnet sein.

Ferner kann die Führungshülse mittels eines angeformten Flansches mit dem Anfahrelement verschraubt sein, woraus sich eine fertigungstechnisch einfachere Konstruktion verwirklichen lässt. Die Führungshülse kann dabei das weitere Lager in dem Anfahrelement axial sichern.

Des weiteren kann zur Vereinfachung der Montage der Antriebsanordnung mit dem Flansch der Führungshülse ein topfförmiger Zwischenflansch befestigt sein, der radial außen liegend mit dem Mitnehmerblech fest verschraubt ist.

Mittels des topfförmigen Zwischenflansches kann das Anfahrelement in einfacher Weise derart zur Stirnwand der Brennkraftmaschine beabstandet sein, dass eine quer verlaufende Antriebswelle eines seitlich zur Brennkraftmaschine und zum Wechselgetriebe positionierten Differenziales unterhalb der Eingangswelle durchführbar ist. Dementsprechend ist das Mitnehmerblech unmittelbar der Stirnwand der Brennkraftmaschine benachbart, während das Anfahrelement zur Herstellung des Freiganges der besagten Antriebswelle entsprechend axial versetzt angeordnet ist.

Das weitere Lager zwischen der Eingangswelle und dem Anfahrelement kann bevorzugt ein doppelreihiges Kugellager sein, über das zuverlässig die auftretenden Stützkräfte und -momente auch bei hohen Drehzahlen und Drehmomenten der Antriebsanordnung aufgenommen werden können.

Bevorzugt kann das Anfahrelement eine Reibungskupplung mit einem Schwungrad, insbesondere einem Zweimassenschwungrad, sein, die über das Mitnehmerblech und den topfförmigen Antriebsflansch trieblich mit der Kurbelwelle der Brennkraftmaschine verbunden sind.

Bei einer mehrfach im Wechselgetriebe gelagerten Eingangswelle wird in vorteilhafter Weiterbildung der Erfindung vorgeschlagen, dass die Eingangswelle zwischen dem weiteren Lager am Anfahrelement und dem Lager an der Getriebewand eine deren Biegesteifigkeit verringernde Ausbildung aufweist, die nahe dem getriebeseitigen Lager positioniert ist. Damit wird vorteilhaft einer statisch überbestimmten Lagerung mit entsprechenden Verspannungen in der Antriebsanordnung entgegengewirkt bzw. ein gezielter Abbau dieser Verspannungen geschaffen. Die Eingangswelle kann dem entsprechend geringe Planlaufabweichungen bzw. Fluchtungsfehler zwischen der Kurbelwelle und der Eingangswelle quasi kompensieren.

Dabei kann die die Biegesteifigkeit verringernde Ausbildung bevorzugt durch eine nutförmige Durchmesserverringerung der Eingangswelle gebildet sein, die fertigungstechnisch einfach realisierbar ist.

Alternativ oder zusätzlich kann die die Biegesteifigkeit verringernde Ausbildung auch durch eine Gefügeveränderung (Härteverringerung) der Einganswelle bewirkt sein; beispielsweise kann der besagte Bereich der Eingangswelle aus Stahl bei deren Fertigung ungehärtet bleiben oder aber eine Härtebehandlung erfahren, die die Materialzähigkeit erhöht (verringerter E-Modul).

Ein Ausführungsbeispiel der Erfindung ist im folgenden mit weiteren Einzelheiten näher erläutert.

Die schematische Zeichnung zeigt einen teilweisen Längsschnitt durch eine Antriebsanordnung zwischen der Kurbelwelle einer Brennkraftmaschine und einem Geschwindigkeits-Wechselgetriebe für ein Kraftfahrzeug, mit einer Reibungskupplung und einem Zweimassenschwungrad als Anfahrelement.

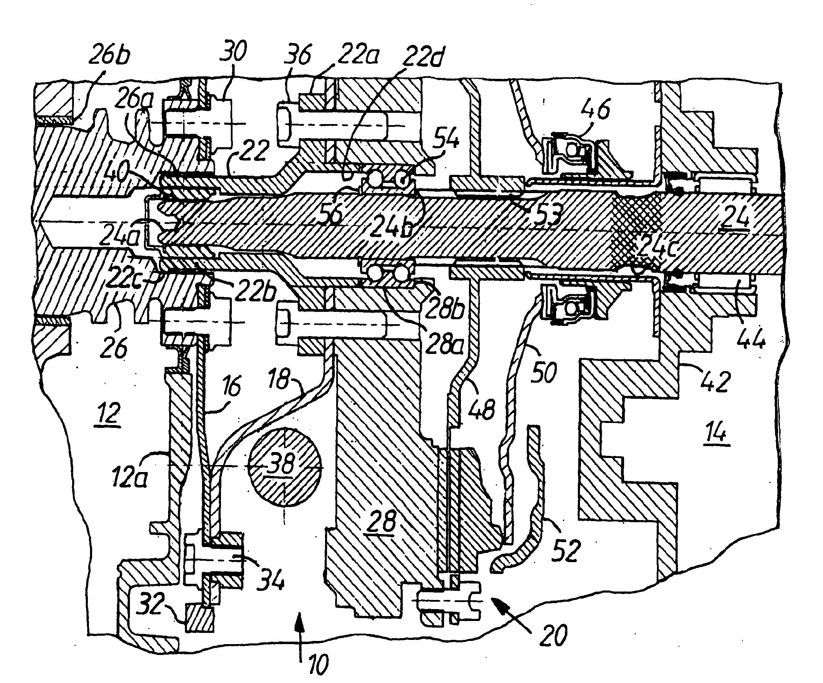

In der Zeichnung ist mit 10 eine Antriebsanordnung teilweise (obere Hälfte abgeschnitten) dargestellt, die zwischen einer nur an deren Kraftabgabeseite gezeigten Brennkraftmaschine 12 und einem Geschwindigkeits-Wechselgetriebe 14 (z.B. einem Schaltgetriebe) positioniert ist. Dabei ist an dem Gehäuse des Wechselgetriebes 14 eine Kupplungsglocke (nicht dargestellt) ausgebildet, die die Antriebsanordnung 10 umschließt und die mit der Stirnwand 12a der Brennkraftmaschine 12 in bekannter Weise verbunden ist.

Es sei bemerkt, dass die Antriebsanordnung 10, sowie die Brennkraftmaschine 12 und das Wechselgetriebe 14 nur soweit beschrieben sind, als dies für das Verständnis der vorliegenden Erfindung erforderlich ist.

Die rotationssymetrische Antriebsanordnung 10 setzt sich im wesentlichen aus einem Mitnehmerblech 16, einem topfförmigen Zwischenflansch 18, einem Anfahrelement 20 und einer Führungshülse 22 zusammen, die um eine Eingangs-welle 24 des Wechselgetriebes 14 wie nachstehend ausgeführt angeordnet sind.

Zunächst ist eine triebliche Verbindung von der Kurbelwelle 26 der Brennkraftmaschine 12 über das Mitnehmerblech 16 und den Zwischenflansch 18 zum Schwungrad 28 des Anfahrelementes 20 geschaffen, wobei das aus Stahlblech hergestellte und somit begrenzt Taumelbewegungen zulassende Mitnehmer-blech 16 (auch Flexblech bezeichnet) mittels Schrauben 30 mit der Stirnseite der Kurbelwelle 26 fest verschraubt ist; über eine radial außen liegende Schraubverbindung mit Schrauben 34 ist das Mitnehmerblech 16 - das zudem einen ringförmigen Starterzahnkranz 32 trägt - mit dem Zwischenflansch 18 verbunden.

Der Zwischenflansch 18 wiederum ist an seinem radial inneren Abschnitt mittels Schrauben 36 und zusammen mit einem Flansch 22a der Führungshülse 22 mit dem Anfahrelement 20 bzw. dessen Schwungrad 28 verschraubt.

Während das etwa radial ausgerichtete Mitnehmerblech 16 unmittelbar der Stirnwand 12a (die auch ein Gehäusedeckel sein kann) der Brennkraftmaschine benachbart ist, schafft der topfförmige Zwischenflansch 18 einen Freiraum relativ zum Anfahrelement 20, in dem unterhalb der Eingangswelle 24 des Wechselgetriebes 14 eine quer verlaufende Antriebswelle 38 eines nicht dargestellten und seitlich an die Brennkraftmaschine 12 und/oder an das Wechselgetriebe 14 angebauten Differenziales zum Antrieb eines Vorderrades des Kraftfahrzeuges positioniert ist.

In der in Hauptlagern 26b in bekannter Weise drehbar gelagerten Kurbelwelle 26 ist in Form einer Bohrung eine Lageraufnahme 26a vorgesehen, in der radial übereinander liegend die Führungshülse 22 über einen ringförmigen Lagerabschnitt 22b und unter Zwischenschaltung einer Lagerhülse 40 der Endzapfen 24a der Eingangswelle 24 drehbar gelagert sind.

Der radial außen liegende Lagerabschnitt 22b der Führungshülse 22 weist einen radial überstehenden Ringbund 22c auf, der in begrenztem Umfang Kippbewegungen der Führungshülse 22 in der zentrischen Lageraufnahme 26a ermöglicht. Der Lagerabschnitt 22b könnte alternativ auch ballig ausgeführt sein.

Des weiteren ist die Eingangswelle 24 in einer der Antriebsanordnung 10 benachbarten Gehäusewand 42 über ein erstes Wälzlager 44 und über zumindest ein weiteres Wälzlager im Getriebegehäuse (nicht dargestellt) des Wechselgetriebes 14 drehbar gelagert.

Das Anfahrelement 20 ist als eine über ein Ausrücklager 46 in bekannter Weise betätigbare Reibungskupplung ausgeführt, mit einer Mitnehmerscheibe 48, einer Anpressfeder 50 und einem Kupplungsgehäuse 52, das mit dem Schwungrad 28 verschraubt ist. Die Mitnehmerscheibe 48 ist drehschlüssig über eine Keilverzahnung 53 mit der Eingangswelle 24 gekoppelt.

Das Schwungrad 28 ist ein bekanntes Zweimassenschwungrad mit einer Primärmasse, einer Sekundärmasse und dazwischen geschalteten Dämpfungseinrichtungen; derartige Zweimassenschwungräder sind handelsüblich, so dass auf eine detaillierte Darstellung und Beschreibung verzichtet werden kann.

In einer zentrischen Bohrung 28a des Schwungrades 28 ist ein doppelreihiges Kugellager 54 angeordnet, dessen Außenring zwischen einer Ringschulter 28b und einem ringförmigen Fortsatz 22d der Führungshülse 22 axial gehalten ist. Ferner ist der Innenring des Kugellagers 54 über einen aufgesprengten Sicherungsring 56 axial auf der Eingangswelle 24 festgelegt; der Innenring stützt sich dabei an einer gegenüber liegenden Ringschulter 24b der Eingangswelle 24 ab.

Das Kugellager 54 bildet ein weiteres Lager zwischen der Eingangswelle 24 und dem Anfahrelement 20, wobei es im wesentlichen im Massenschwerpunkt des Anfahrelementes 20 und zwischen der Lageraufnahme 26a der Kurbelwelle 26 und dem ersten getriebeseitigen Wälzlager 44 positioniert ist.

Nahe dem getriebeseitigen Wälzlager 44 ist die Eingangswelle 24 mit einer die Biegesteifigkeit der Eingangswelle 24 verringernden Ausbildung versehen, die durch eine nutförmige Durchmesserverringerung 24c und zusätzlich durch eine in diesem Bereich fertigungstechnisch hergestellte Gefügeveränderung (dargestellt durch Kreuzschraffur) gebildet ist. Die Gefügeveränderung kann z.B. eine die Zähigkeit der Eingangswelle 24 aus legiertem Stahl erhöhende Wärmebehandlung in diesem Bereich sein.

Mit dieser die Biegesteifigkeit der Eingangswelle 24 bei 24c verringernden Ausbildung kann vermieden werden, dass durch eine statisch überbestimmte Lagerung der Eingangswelle 24 und bei geringen Fluchtungsfehlern oder Planlauffehlern von Kurbelwelle 26 zu Eingangswelle 24 unzulässig hohe Materialspannungen auftreten, die die Funktionsfähigkeit der beschriebenen Antriebsanordnung 10 beeinträchtigen könnten.

Ferner ist das aufgrund des erforderlichen Freiraumes für die besagte Antriebswelle 38 des Differenziales von der Lageraufnahme 26a bzw. dem Hauptlager 26b der Kurbelwelle 26 weg gerückte Anfahrelement 20 über das weitere Lager bzw. Kugellager 54 schwingungsresistent und drehzahlfest teils unmittelbar auf der Eingangswelle 24 und teils über die Führungshülse 22 an der Kurbelwelle 26 abgestützt.

Ggf. durch Planlauffehler oder Fluchtungsfehler sich ergebende, geringfügige Rundlaufabweichungen des Anfahrelementes 20 relativ zur Kurbelwelle 26 werden dabei über das begrenzt flexible Mitnehmerblech 16 kompensiert.

## Patentansprüche

1. Antriebsanordnung mit einer Brennkraftmaschine (12) und einem nachgeschalteten Geschwindigkeits-Wechselgetriebe (14) Kraftfahrzeuge, mit einem an die Kurbelwelle (26) der Brennkraftmaschine über einen sich radial erstreckenden Mitnehmerflansch angeschlossenen Anfahrelement, (20) das auf eine Eingangswelle (24) des Wechselgetriebes abtreibt, **dadurch gekennzeichnet, dass** die Eingangswelle in einer angrenzenden Wand des Wechselgetriebes und in einer zentrischen Lageraufnahme der Kurbelwelle beiderseits des Anfahrelementes drehbar gelagert ist, wobei der Mitnehmerflansch durch ein Taumelbewegungen zulassendes Mitnehmerblech (16) gebildet ist und wobei das Anfahrelement (20) über ein weiteres Lager (54) auf der Eingangswelle (24) drehbar gelagert bzw. abgestützt ist.

2. Antriebsanordnung nach Anspruch 1, **dadurch gekennzeichnet, dass** an dem Anfahrelement (20) eine axial zur Kurbelwelle (26) abragende und die Eingangswelle (24) umschließende Führungshülse (22) vorgesehen ist, die ebenfalls in der Lageraufnahme (26a) der Kurbelwelle (26) gelagert ist.

3. Antriebsanordnung nach Anspruch 2, **dadurch gekennzeichnet, dass** die Führungshülse (22) und die Eingangswelle (24) radial übereinander liegend in der Lageraufnahme (26a) der Kurbelwelle (26) drehbar gelagert sind und dass zumindest das äußere Lager (22b) der Führungshülse (22) ein begrenzte Kippbewegungen der Eingangswelle (24) relativ zur Kurbelwelle (26) zulassendes Lager (22c) ist.

4. Antriebsanordnung nach den vorhergehenden Ansprüchen, **dadurch gekennzeichnet, dass** zwischen der Eingangswelle (24) und der Führungshülse (22) im Bereich der entsprechenden Lagerzapfen (22b, 24a) eine Lagerhülse (40) angeordnet ist.

5. Antriebsanordnung nach einem oder mehreren der vorhergehenden Ansprüche, **dadurch gekennzeichnet, dass** die Führungshülse (22) mittels eines angeformten Flansches (22a) mit dem Anfahrelement (20) verschraubt ist.

6. Antriebsanordnung nach einem oder mehreren der vorhergehenden Ansprüche, **dadurch gekennzeichnet, dass** mit dem Flansch (22a) der Führungshülse (22) ferner ein topfförmiger Zwischenflansch (18) befestigt ist, der radial außen liegend mit dem Mitnehmerblech (16) verschraubt ist.

7. Antriebsanordnung nach Anspruch 6, **dadurch gekennzeichnet, dass** mittels des topfförmigen Zwischenflansches (18) das Anfahrelement (20) derart zur Stirnwand (12a) der Brennkraftmaschine (12) beabstandet ist, dass eine quer verlaufende Antriebswelle (38) eines seitlich zur Brennkraftmaschine (12) und zum Wechselgetriebe (14) positionierten Differenziales unterhalb der Eingangswelle (24) durchführbar ist.

8. Antriebsanordnung nach einem oder mehreren der vorhergehenden Ansprüche, **dadurch gekennzeichnet, dass** das weitere Lager zwischen der Eingangswelle (24) und dem Anfahrelement (20) ein doppelreihiges Kugellager (24) ist.

9. Antriebsanordnung nach einem oder mehreren der vorhergehenden Ansprüche, **dadurch gekennzeichnet, dass** das Anfahrelement (20) eine Reibungskupplung (46, 48, 50, 52) mit einem Schwungrad (28), insbesondere einem Zweimassenschwungrad, ist.

10. Antriebsanordnung nach einem oder mehreren der vorhergehenden Ansprüche, **dadurch gekennzeichnet, dass** bei einer mehrfach im Wechselgetriebe (14) gelagerten Eingangswelle (24) diese zwischen dem weiteren Lager (54) am Anfahrelement (20) und dem Lager (44) an der Getriebewand (42) eine deren Biegesteifigkeit verringernde Ausbildung (24c) aufweist, die nahe dem getriebeseitigen Lager (44) positioniert ist.

11. Antriebsanordnung nach Anspruch 10, **dadurch gekennzeichnet, dass** die die Biegesteifigkeit verringernde Ausbildung durch eine nutförmige Durchmesserverringerung (24c) der Eingangswelle (24) gebildet ist.

12. Antriebsanordnung nach Anspruch 10 oder 11, **dadurch gekennzeichnet, dass** die die Biegesteifigkeit verringernde Ausbildung durch eine Gefügeveränderung (Härteverringerung) der Einganswelle (24) bewirkt ist.

## Claims

1. A drive arrangement with an internal combustion engine (12) and a downstream connected speed change gear (14) for motor vehicles, with a starting element (20) connected to the crankshaft (36) of the internal combustion engine by a radially extending driving flange, which starting element is driven by an input shaft (24) of the change gear, **characterised in that** the input shaft is rotatably mounted in an adjoining wall of the change gear and in a centric bearing housing of the crankshaft on both sides of the starting element, wherein the driving flange is formed by a driving plate (16) allowing thumb movements, and wherein the starting element (20) is rotatably mounted or supported by a further bearing (54) on the input shaft (24).

2. The drive arrangement according to Claim 1, **characterised in that** a guide sleeve (22) projecting axially to the crankshaft (26) an enclosing the input shaft (24) is provided on the starting element (20), which sleeve is also mounted in the bearing housing (26a) of the crankshaft (26).

3. The drive arrangement according to Claim 2, **characterised in that** the drive sleeve (22) and the input shaft (24) are rotatably mounted in the bearing housing (26a) of the crankshaft (26) so that they lie radially above one another, and **in that** at least the outer bearing (22b) of the guide sleeve (22) is a bearing (22c) allowing limited tilting movements of the input shaft (24) relative to the crankshaft (36).

4. The drive arrangement according to the preceding claims, **characterised in that** a bearing sleeve (4) is arranged between the input shaft (24) and the guide sleeve (22) in the region of the corresponding bearing journals (22b, 24a).

5. The drive arrangement according to one or more of the preceding claims, **characterised in that** the guide sleeve (22) is screwed to the starting element (20) by means of a flange (22a) formed on it.

6. The drive arrangement according to one or more of the preceding claims, **characterised in that** a pot-shaped intermediate flange (18) is fastened to the flange (22a) of the guide sleeve (22), which flange is screwed to the driving plate (16) radially on the outside.

7. The drive arrangement according to Claim 6, **characterised in that** the starting element (20) is separated by the pot-shaped intermediate flange (18) at such a distance from the front wall (12a) of the internal combustion engine (12) that a transversely running drive shaft (38) of a differential positioned laterally relative to the internal combustion engine (12) and the change gear (14) can be guided underneath the input shaft (24).

8. The drive arrangement according to one or more of the preceding claims, **characterised in that** the further bearing between the input shaft (24) and the starting element (20) is a double-row ball bearing (24).

9. The drive arrangement according to one or more of the preceding claims, **characterised in that** the starting element (20) is a friction clutch (46, 48, 50, 52) with a flywheel (28), in particular a two-mass flywheel.

10. The drive arrangement according to one or more of the preceding claims, **characterised in that** in the case of an input shaft (24) mounted at several points in the change gear (14), this shaft has a formation (24c) that reduces its flexural stiffness between the further bearing (54) on the starting element (20) and the bearing (44) on the gear wall (42), which formation is positioned in the proximity of the gear-side bearing (44).

11. The drive arrangement according to Claim 10, **characterised in that** the formation reducing the flexural stiffness is formed by a groove-shaped diameter reduction (24c) of the input shaft (24).

12. The drive arrangement according to Claim 10 or 11, **characterised in that** the formation reducing the flexural stiffness is produced by a structural variation (reduction in hardness) of the input shaft (24).

## Revendications

1. Dispositif d'entraînement doté d'un moteur à combustion interne (12) et une boîte de vitesses (14) montée en aval pour véhicules automobiles avec un élément de démarrage (20) raccordé sur le vilebrequin (26) du moteur à combustion interne par une bride d'entraînement s'étendant radialement, qui sort sur un arbre d'admission (24) de la boîte de vitesses,
**caractérisé en ce que** l'arbre d'admission est disposé de manière à pouvoir tourner des deux côtés de l'élément de démarrage dans une paroi adjacente de la boîte de vitesses et dans un logement de palier centré du vilebrequin, moyennant quoi la bride d'entraînement est formée par une tôle d'entraînement (16) admettant un mouvement de nutation et moyennant quoi l'élément de démarrage (20) est positionné de manière à pouvoir tourner ou est appuyé sur l'arbre d'admission (24) par un autre palier (54).

2. Dispositif d'entraînement selon la revendication 1,
**caractérisé en ce que** sur l'élément de démarrage (20), un manchon de guidage (22) faisant saillie axialement par rapport au vilebrequin (26) et entourant l'arbre d'admission (24) est prévu, lequel est également positionné dans le logement de palier (26a) du vilebrequin (26).

3. Dispositif d'entraînement selon la revendication 2,
**caractérisé en ce que** le manchon de guidage (22) et l'arbre d'admission (24) sont positionnés de manière à pouvoir tourner radialement l'un sur l'autre en reposant dans le logement de palier (26a) du vilebrequin (26) et qu'au moins le palier extérieur (22b) du manchon de guidage (22) est un palier (22c) admettant des mouvements de bascule limités de l'arbre d'admission (24) par rapport au vilebrequin (26).

4. Dispositif d'entraînement selon l'une des revendications précédentes,
**caractérisé en ce qu'**entre l'arbre d'admission (24) et le manchon de guidage (22), une douille de palier (40) est placée au niveau des tourillons (22b, 24a) correspondants.

5. Dispositif d'entraînement selon l'une ou plusieurs des revendications précédentes,
**caractérisé en ce que** le manchon de guidage (22) est vissé à l'élément de démarrage (20) au moyen d'une bride (22a) conformée.

6. Dispositif d'entraînement selon l'une ou plusieurs des revendications précédentes,
**caractérisé en ce qu'**une bride intermédiaire (18) en forme de pot est fixée en outre à la bride (22a) du manchon de guidage (22), qui est vissée radialement vers l'extérieur à la tôle d'entraînement (16).

7. Dispositif d'entraînement selon la revendication 6,
**caractérisé en ce qu'**au moyen de la bride intermédiaire (18) en forme de pot, l'élément de démarrage (20) est écarté de la face frontal (12a) du moteur à combustion interne (12) de telle sorte qu'un arbre d'entraînement (38) transversal d'un différentiel positionné sur le coté par rapport au moteur à combustion interne (12) et à la boite de vitesses (14) peut être réalisé sous l'arbre d'admission (24).

8. Dispositif d'entraînement selon l'une ou plusieurs des revendications précédentes,
**caractérisé en ce que** l'autre palier entre l'arbre d'admission (24) et l'élément de démarrage (20) est un roulement à bille à double rangée (24).

9. Dispositif d'entraînement selon l'une ou plusieurs des revendications précédentes,
**caractérisé en ce que** l'élément de démarrage (20) est un embrayage à frottement (46, 48, 50, 52) avec un volant moteur (28), particulièrement un volant moteur à deux masses.

10. Dispositif d'entraînement selon l'une ou plusieurs des revendications précédentes,
**caractérisé en ce qu'**avec un arbre d'admission (24) disposé plusieurs fois dans la boite de vitesses (14), celui-ci présente entre l'autre palier (54) sur l'élément de démarrage (20) et le palier (44) sur la paroi de vitesses (42) une formation (24c) réduisant sa rigidité à la flexion qui est positionnée près du palier côté vitesses (44).

11. Dispositif d'entraînement selon la revendication 10,
**caractérisé en ce que** la formation réduisant la rigidité à la flexion est formée par une réduction de diamètre (24c) de l'arbre d'admission (24) en forme de gorge.

12. Dispositif d'entraînement selon la revendication 10 ou 11,
**caractérisé en ce que** la formation réduisant la rigidité à la flexion agit par une modification de structure (réduction de la dureté) de l'arbre d'admission (24).
